# EUROPEAN PATENT SPECIFICATION

(11) **EP 2 594 395 B1**
(45) Date of publication and mention of the grant of the patent: **20.09.2017**
(21) Application number: 10854594.8
(22) Date of filing: 27.08.2010
(51) Int. Cl.: B32B 27/08, B32B 27/18, B32B 37/12

(54) **MULTIFUNCTIONAL LONG-ACTING RUST-PROOF FILM AND MANUFACTURING METHOD THEREOF**
ULTIFUNKTONSROSTSCHUTZFILM MIT LANGZEITWIRKUNG UND HERSTELLUNGVERFAHREN DAFÜR
FILM ANTIROUILLE À ACTION LONGUE DURÉE MULTIFONCTION ET SON PROCÉDÉ DE FABRICATION

(30) Priority: 13.07.2010 CN 201010225078
(43) Date of publication of application: 22.05.2013
(73) Proprietor: Zhejiang Great Southeast Packaging Co. Ltd., Zhuji, Zhejiang 311809 (CN)
(72) Inventor: HUANG, Shuishou, Zhejiang 311809 (CN); GUO, Jiayi, Zhejiang 311809 (CN)
(74) Representative: Rhein, Alain
(86) International application number: PCT/CN2010/076413
(87) International publication number: WO 2012/006802

(56) References cited:
- CN-A- 101 318 392
- CN-A- 101 318 392
- CN-Y- 2 587 633
- JP-A- 1 297 241
- JP-A- 3 243 344
- JP-A- 2006 078 134
- US-B1- 6 488 998

## Description

### FIELD OF THE INVENTION

The invention relates to a antirust film and a preparation method thereof.

### BACKGROUND ART

All metal preparations are faced with antirust problems. With the rapid development of industrial production, antirust method has been developed from the most simple plating, coating, vacuum packaging, painting, coating with antirust oil, to the method of Volatile Corrosion Inhibitor (VCI), with an extensive application to rust inhibition of black metal and its products.

According to the current application situation of VCI antirust films, there are still many shortcomings:
① The current antirust agents have acceptable rust inhibiting effect, but they are toxic and the release of gas has an impact on the human body, and the toxicity can not be ignored, endangering crowd safety; some antirust films only exhibit rust inhibiting effect on steel metals, but little on other metals.
② Current antirust films usually adopt polyethylene. Because the tensile strength of polyethylene film is not very good, with polyethylene blown film equipment limitations, it is difficult to make super- wide thin-film and therefore is incompatible with the requirements of the rust inhibition of large-scale equipments, large-scale scientific instruments aerospace equipments, and large-scale devices.
③ current antirust films adopts polyethylene as the main base and VCI as gas source of the antirust agent, due to poor performance of existing antirust agent, together with poor gas barrier property of polyethylene film, resulting in many antirust gas volatilizing from antirust bags made of films to bag outside, which not only waste the resources, but also make antirust time of the items can only reach 2 to 3 years; and as large-scale precision equipments and major aerospace facilities, they are required to be antirust over time in 10 years, so the existing antirust film can not meet this requirement.

□ As the antirust item is stored in the antirust bag made of antirust film, it saves a long time and is easy to breed mold and other colonies, although the VCI has antirust capabilities for metals, but can not kill the mold and other colony, therefore, for a especially long shelf of large-scale equipments, instruments and equipments, aerospace equipments, etc., when the existing antirust film open, you can find a lot of mold or other colonies.
□ With the development of science and technology, there will be more and more large-scale research equipments and aerospace equipments, precision instruments, and finishing equipments, antirust film have become increasingly demanding; However, following the market-use of polyethylene antirust film currently, we can not reach a very wide range, because of poor tensile strength causing leading to occurrence of bags breaking and air leaking, together with poor barrier property and short-time antirust of the film, which can not adapt to the large-scale equipments.

### SUMMERY OF THE INVENTION

In order to overcome the disadvantages that the current VCI film barrier with poor barrier property, low endurance, can not be applied to large-scale equipments, the invention provides a multifunctional, long-acting antirust film, which has a good barrier property, maintains an antirust effect for a long time, and is effectively used in large-scale equipments. Aslo provided is a method for preparing the multifunctional, long-acting antirust film.

In order to solve the above technical problem, the invention adopts the following technical scheme:
a multifunctional, long-acting antirust film comprises: a nylon 6 thin-film layer, an adhesive layer, an antimicrobial layer and an antirust layer; the antimicrobial layer covers the antirust layer, the adhesive layer covers the antimicrobial layer, and the nylon 6 thin-film layer covers the adhesive layer ;
in the multifunctional, long-acting antirust film, the nylon 6 thin-film layer accounts for from 25% to 32%, the adhesive layer accounts for from 6% to 8%, the antimicrobial layer accounts for from 30 to 35%, and the antirust layer accounts for from 26% to 35% of its total mass;
the antirust layer comprises from 23.5 to 26 parts by mass of a binary copolymer of PP, from 3 to 4 parts by mass of a thermoplastic elastomer, from 0.5 to 1 parts by mass of an antisticking agent and from 2 to 4 parts by mass of an antirust masterbatch;
the antimicrobial layer comprises from 27 to 29 parts by mass of polyethylene and from 3 to 6 parts by mass of an antimicrobial masterbatch.

As a preferred technical scheme, the adhesive layer uses a laminating adhesive for dry lamination machine.

Further, the nylon 6 thin layer uses a polyamide-6 thin film.

Further, in the antimicrobial agent layer, the polyethylene uses metallocene polyethylene.

Still further, in the antirust layer, the antirust masterbatch uses benzotriazole antirust masterbatch.

A method for preparing the multifunctional, long-acting antirust film, includes the following steps of:
(1) selecting materials: in the multifunctional, long-acting antirust film, the nylon 6 thin-film layer accounts for 25∼32%, the adhesive layer accounts for 6∼8 %, the antimicrobial layer accounts for 30∼ 35%, and the antirust layer accounts for 26 to 35% of the total mass;
   the antirust layer comprises from 23.5 to 26 parts by mass of a binary copolymer af PP, from 3 to 4 parts by mass of a thermoplastic elastomer, from 0.5 to 1 parts by mass of an antisticking agent and from 2 to 4 parts by mass of an antirust masterbatch;
   the antimicrobial layer comprises from 27 to 29 parts by mass of polyethylene and from 3 to 6 parts by mass of an antimicrobial masterbatch.
(2) a process for preparing an antirust layer adopts a co-extruded biaxial stretching method, and specifically includes the following steps:
   (2.1) melting, plasticizing and extruding: plasticizing and extruding the configured materials of a binary copolymer of PP, a thermoplastic elastomer, an antisticking agent and an antirust masterbatch using an extruder to obtain molten materials;
   (2.2) filtering: filtering the molten materials;
   (2.3) tape-casting: having the filtered molten material attached to the chill-roll surface, and forming a cast film with the aid of a quenching roll, water bath and a guide roll;
   (2.4) stretching: taking the cast film off, stretching it in the longitudinal direction, and then stretching it in the transverse direction;
   (2.5) cooling the stretched film and shaping it into a thin film; and
   (2.6) traction winding-up: subjecting the thin film to edge trimming, thickness measuring and corona treatment, and then winding the thin film into a tubular film roll;
(3) applying an antimicrobial material to the antirust layer using a laminating machine; and
(4) applying an adhesive to the antimicrobial layer, then having a nylon 6 thin-film glued to the adhesive layer using a lamination machine, to form a multifunctional, long-acting antirust film.

As a preferred technical scheme: the step(3) includes the following steps:
(3.1) premixing polyethylene with an antimicrobial masterbatch, feeding the mixture into the hopper using a feeder, then into the extruder for melting and plasticizing the mixture, and filtering the molten mixture using a filter before entering the T- type die head;
(3.2) laminating: laminating the flake melt extruded from the die lip of the T-type die head to the antirust inhibitor layer uniformly; and
(3.3) Thickness measuring and edge trimming: measuring the thickness of the laminated film, winding it into a roll film, and subjecting the roll film to edge trimming treatment.

Still further, the antirust masterbatch is mixed and pelleted using a pressurized reciprocating twin-screw intermixing extruder.

The beneficial effects of the present invention is mainly embodied in: the VCI film has versatility and long-term effectiveness, wherein the antirust gas is non-toxic and environmentally friendly, and does no harm to the human body and the air. It can solve the antirust problems of black metal and non-ferrous metals and also the large-scale antirust problems of high-end facilities, such as large-scale equipments, aerospace equipments, and so on, and maintain antirust effect for at least 10 years. By adjusting the structure of the antirust film, it is achieved that: the gas in the antirust film bag does not leak, the mold and harmful colonies do not breed in the bag, the antirust parts have long-term antirust effect, and harmful bacteria do not grow on the antirust parts, without polluting the environment and affecting the health of staff.

### BRIEF DESCRIPTIONS OF THE DRAWING

Figure 1 is the structure diagram of multifunctional, long-acting antirust film.
Figure 2 is the process flow chart of a method for preparing the multifunctional, long-acting antirust film.

### MODE OF CARRYING OUT THE INVENTION

The present invention is further described through the specific examples. However, the present invention is by no means limited to the listed examples herein:

### Example 1

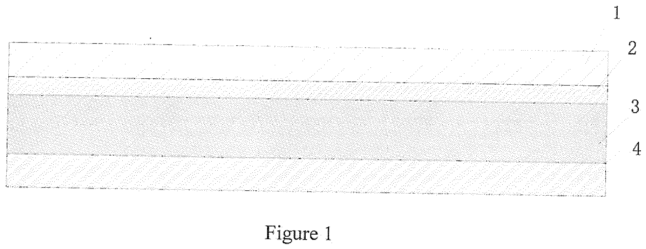

Refer to Figure 1: a multifunctional, long-acting antirust film, comprises a nylon 6 thin layer 1, an adhesive layer 2, an antimicrobial layer 3 and an antirust layer 4; where the antimicrobial layer 3 covers the antirust layer 4, the adhesive layer 2 covers the antimicrobial layer 3, and the nylon 6 film layer 1 covers the adhesive layer 2;
in the multifunctional, long-acting antirust film, the nylon 6 thin layer accounts for 25% to32 %, the adhesive layer 2 accounts for 6% to 8%, the antimicrobial layer 3 accounts for 30% to 35%, and the antirust layer 4 accounts for 26% to 35% of its total mass;
the antirust layer 2 comprises from 23.5 to 26 parts by mass of a binary copolymer of PP, from 3 to 4 parts by mass of a thermoplastic elastomer, from 0.5 to 1 parts by mass of an antisticking agent and from 2 to 4 parts by mass of an antirust masterbatch;
the antimicrobial layer 3 comprises from 27 to 29 parts by mass of polyethylene and from 3 to 6 parts by mass of an antimicrobial masterbatch.

The adhesive layer 2 uses a laminating adhesive for dry lamination machine. The nylon 6 thin layer uses a polyamide-6 thin film. In the antimicrobial layer 3, the polyethylene uses metallocene polyethylene. In the antirust layer, the antirust masterbatch uses a benzotriazole antirust masterbatch.

In the multifunctional, long-acting antirust film of the present example, the nylon 6 thin layer accounts for 25%, the adhesive layer 2 accounts for 6 %, the antimicrobial layer 3 accounts for 35%, and the antirust layer 4 accounts for 34% of its total mass.

The antirust layer 4 is BOPP film, which comprises the following components:
A a binary copolymer of PP, produced by the BSELL company, with a trade name of 7384PP, 23.5 - 26 parts;
B a thermoplastic elastomer, produced by Dutch Shell Chemical Company, with a trade name of G1652, 3∼4 parts;
C an antisticking agent, produced by Suzhou Constab Engineering Plastics Company, with a trade name of AB6018PP, 0.5∼1 parts;
D an antirust masterbatch, benzotriazole antirust masterbatch, 2-4 parts.

The antimicrobial layer 3 is a thin-film layer formed by laminating raw materials using a laminating machine, and the raw materials comprise the following components:
A metallocene polyethylene(mLLPE), produced by Exxon Chemical Company(USA), 27∼29 parts;
B an antimicrobial masterbatch, PE-BMFZ, produced by Shanghai Weilai New Material Co., Ltd., 3-6 parts.

In order to improve the adhesive quality of lamination, metallocene polyethylene(mLLPE) is used as the substrate.

The adhesive layer 2 of the multifunctional, long-acting antirust film, is a binder layer laminated using a dry lamination machine, and the raw material is: a universal laminating adhesive for the dry lamination machine, non-toxic LH-7755A, reaching the food-grade standard of use, produced by Jintan City adhesive Plant.

The nylon 6 thin-film layer 1, in which nylon 6 is Polyamide-6, and the nylon 6 (polyamide-6) film is produced by Zhejiang Huisheng Plastic & Rubber Company.

In the example, the technical process for preparing the multifunctional, long-acting antirust film is as follows:
① Currently, there are many kinds of VCI at home and abroad, with different properties. In order to obtain superior antirust properties, a safe, reliable and efficient VCI film is required. The selection of the VCI agent is one of the key technics of this application. The application selects benzotriazole as the VCI agent, whose antirust performance is very good and can meet very good levels of antirust requirements (such as the U.S. military standard MIL-1-22110). Benzotriazole has good thermal stability. It is non-toxic and does not have harmful physiological toxicity on human body. It can be extracted from the by-product produced during vitamin B6 production, with low cost.

The structural formula of Benzotriazole antirust agent is: 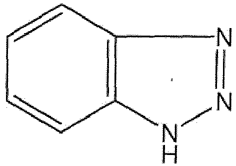
Molecular formula: C₆H₅N₃
Molecular weight: 119.12;
Main properties: Benzotriazole is white to light pink needle-like crystals, and non-toxic; melting point is 9805 □, and boiling point is 204 □ (2.0Kpa) or 159 □ (0.267Kpa); benzotriazole is soluble in alcohol, benzene, toluene, chloroform and dimethylformamide, and slightly soluble in water.

Benzotriazole as the VCI agent is mixed with plastic particles to form a VCI masterbatch. Benzotriazole is capable of forming covalent bonds and coordinating bonds with metal atoms, and mostly cross-linked to each other to produce a chain polymer and form multilayer protective films on the metal surface, which protects the metal surface from oxidation reaction and plays an effective role in the rust inhibition.

The process for developing the antirust Masterbatch: currently, ordinary VCI masterbatch preparation adopts conventional mixing techniques, which requires long mixing time and high temperature and makes the VCI easy to decompose. The antirust films prepared by the conventional techniques have poor antirust effects and short antirust time. It is necessary to adopt an advanced antirust film and a novel masterbatch manufacturing technique to achieve high antirust effect.

In the invention, the VCI masterbatch is mixed and pelleted using a pressurized reciprocating twin-screw intermixing extruder, and the process for preparing the VCI masterbatch using the device has the following characteristics:
① Since the device is equipped with two mandatory charging hoppers, antirust agents and additives may be added in two parts, and do not need to premix;
② Increased torque and difficulty in filling caused by the addition of a large number of antirusts together with the base material are avoided;
③ The antirusts and additives can be dispersed well due to the Screw structure and operation mode of the device;
④ The true temperature of the melt can be measured with the pin of the device , so it is possible to impose strict and accurate control on mixing, with the result that the melt mixing time can be shortened and the VCI is not easy to break down.

Major device, materials, and technical parameters of the process for preparing the antirust masterbatch are as follows:
major device: pressurized reciprocating twin-screw intermixing extruder;
VCI: benzotriazole; additives: Cyclohexylamine Carbonate, sodium molybdate; base material: Polyolefin resin PP ;
the antirust masterbatch is produced by mixing and extruding, and has a good antirust effect on more than ten metals, including steel, iron, copper, silver, aluminum, zinc, nickel, magnesium, and aluminum;
technical parameters: mixing temperature: 170 ∼ 180°C, mixing time: 35min ∼ 45min, the temperature controlled as follows:
temperature control of the pressurized reciprocating twin-screw intermixing extruder can be seen in Table 1:

**Table 1**

| Zone 1 | Zone 2 | Zone 3 | Zone 4 | Zone 5 |
|---|---|---|---|---|
| 110∼120°C | 130∼140°C | 140∼150°C | 140-150°C | 140∼150°C |

plasticizing temperature control can be seen in Table 2:

**Table2**

| Body 1 | Body 2 | Body 3 | Handpiece | Die |
|---|---|---|---|---|
| 120∼130°C | 140∼160°C | 150∼170°C | 150∼160°C | 150∼160°C |

### Example2

Refer to Figure 1: in this example, in the multifunctional, long-acting antirust film, the nylon 6 thin layer accounts for 28 %, the adhesive layer 2 accounts for 7 %, the antimicrobial layer 3 accounts for 32.5 %, and the antirust layer 4 accounts for 32.5 % of its total mass;
other solutions and work processes of the example are the same as the example 1.

### Example 3

Refer to Figure 1: in the multifunctional, long-acting antirust film of this example, the nylon 6 thin layer accounts for 30 %, the adhesive layer 2 accounts for 7.5 %, the antimicrobial layer 3 accounts for 32 %, and the antirust layer 4 accounts for 30.5 % of its total mass;
other solutions and work processes of the example are the same as the example 1.

### Example 4

Refer to Figure 1: in the multifunctional, long-acting antirust film of this example, the nylon 6 thin layer accounts for 31 %, the adhesive layer 2 accounts for 8 %, the antimicrobial layer 3 accounts for 31%, and the antirust layer 4 accounts for 30 % of its total mass;
other solutions and work processes of the example are the same as the example 1.

### Example 5

Refer to Figure 1: in the multifunctional, long-acting antirust film of this example, the nylon 6 thin layer accounts for 32 %, the adhesive layer 2 accounts for 7.5 %, the antimicrobial layer 3 accounts for 30 %, and the antirust layer 4 accounts for 30.5 % of its total mass;
other solutions and work processes of the example are the same as the example 1.

### Example 6

Refer to Figure 1: in the multifunctional, long-acting antirust film of this example, the nylon 6 thin layer accounts for 32 %, the adhesive layer 2 accounts for 8 %, the antimicrobial layer 3 accounts for 34 %, and the antirust layer 4 accounts for 26 % of its total mass;
Other solutions and work processes of the example are the same as the example 1.

### Example 7

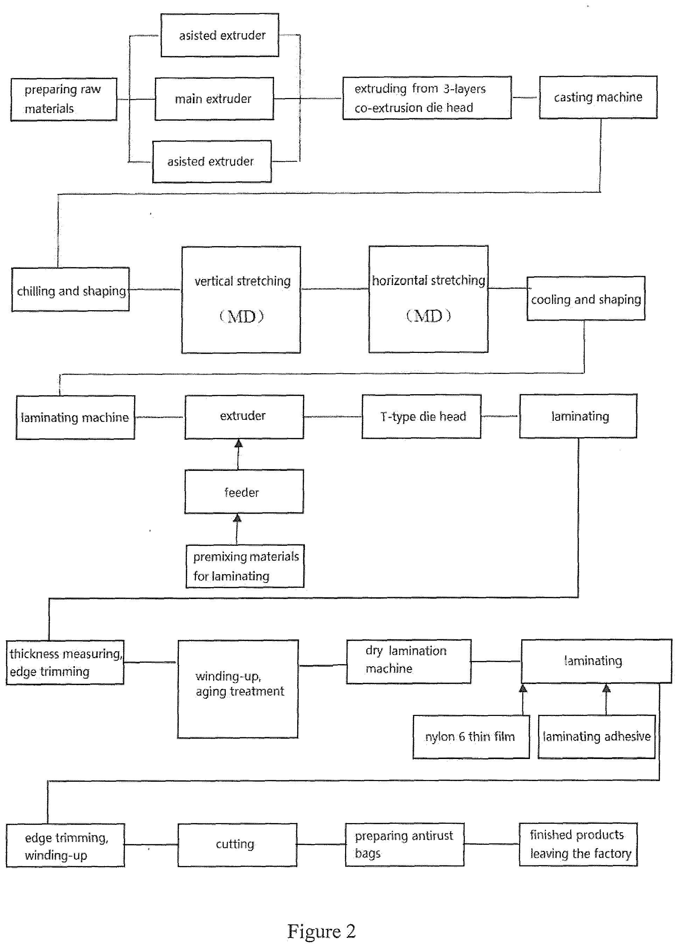

Refer to Figure 1 and Figure 2: a method for preparing a multifunctional, long-acting antirust film, including the following steps of:
(1) selecting materials: in the multifunctional, long-acting antirust film, the nylon 6 thin-film layer accounts for 25∼32%, the adhesive layer accounts for 6∼8 %, the antimicrobial layer accounts for 30- 35%, and the antirust layer accounts for 26 to 35% of the total mass;
   the antirust layer comprises from 23.5 to 26 parts by mass of a binary copolymer of PP, from 3 to 4 parts by mass of a thermoplastic elastomer, from 0.5 to 1 parts by mass of an antisticking agent and from 2 to 4 parts by mass of an antirust masterbatch;
   the antimicrobial layer comprises from 27 to 29 parts by mass of polyethylene and from 3 to 6 parts by mass of an antimicrobial masterbatch.
(2) a process for preparing an antirust layer adopts a co-extruded biaxial stretching method, and specifically includes the following steps:
   (2.1) melting, plasticizing and extruding: plasticizing and extruding the configured materials of a binary copolymer of PP, a thermoplastic elastomer, an antisticking agent and an antirust masterbatch using an extruder to obtain molten materials;
   (2.2) filtering: filtering the molten materials;
   (2.3) tape-casting: having the filtered molten material attached to the chill-roll surface, and forming a cast film with the aid of a quenching roll, water bath and a guide roll;
   (2.4) stretching: taking the cast film off, stretching it in the longitudinal direction, and then stretching it in the transverse direction;
   (2.5) cooling the stretched film and shaping it into a thin film; and
   (2.6) traction winding-up: subjecting the thin film to edge trimming, thickness measuring and corona treatment, and then winding the thin film into a tubular film roll;
(3) applying an antimicrobial material to the antirust layer using a laminating machine; and
(4) applying an adhesive to the antimicrobial layer, then having a nylon 6 thin-film glued to the adhesive layer, to form a multifunctional, long-acting antirust film.

The step (3) includes the following steps:
(3.1) premixing polyethylene with an antimicrobial masterbatch, feeding the mixture into the hopper using a feeder, then into the extruder for melting and plasticizing the mixture, and filtering the molten mixture using a filter before entering the T- type die head;
(3.2) laminating: laminating the flake melt extruded from the die lip of the T-type die head to the antirust inhibitor layer uniformly; and
(3.3) thickness measuring and edge trimming: measuring the thickness of the laminated film, winding it into a roll film, and subjecting the roll film to edge trimming treatment.

The antirust masterbatch is mixed and pelleted using a pressurized reciprocating twin-screw intermixing extruder.

In the multifunctional, long-acting antirust film of the present example, the nylon 6 thin layer accounts for 25 %, the adhesive layer 2 accounts for 6 %, the antimicrobial layer 3 accounts for 35 %, and the antirust layer 4 accounts for 34 % of its total mass;

The preparation of the antirust layer adopts a co-extruded biaxial stretching method, where the production system is controlled by a computer, and the production process is:
raw materials preparation-melting, plasticizing and extruding-filtering the molten materials-extruding from the die head -chilling and shaping-vertical stretching-horizontal stretching-cooling and shaping-Corona treatment-thickness measuring, tracting- constant breadth edge trimming -winding-up.

It is required that the melting temperature and plasticizing temperature are kept below 200°C, in order to prevent excessive gasification of the antirust masterbatch.

The antimicrobial layer is a laminated layer, which comprises PE as the base material and the antimicrobial agent masterbatch as the adjuvant. In order to improve the bond strength of the laminated layer, metallocene polyethylene (mLLPE) is used as the base material. The materials are coated on the antirust layer using the laminating machine, and the process includes the following steps:
(1) preparing raw materials and plasticizing them:
   mLLPE and the antimicrobial masterbatch are weighed with a batch meter and premixed. A feeder is used for feeding the premixed materials into the hopper, then into the extruder, in which the materials are melted and plasticized. The molten materials are filtered using a filter before entering the T- type die head. Homogeneous PE and antimicrobial mixed melt is laminated through a automatic adjustable die lip as flaky melt onto the antirust layer uniformly and with consistent thickness.
(2) laminating:
   the flake melt extruded from the die lip is uniformly laminated onto the BOPP antirust layer to form a BOPP / PE laminated film with required thickness;
(3) thickness measuring and edge-trimming
   The actual thickness of the film is measured using an automatical thickness gauge, and the data obtained are automatically feedback to the mLLPE extruder, so as to adjust the opening size of the die lip in real time to control the extrusion amount of the melt, and thus ensure that the thickness error of the laminated film is within the allowable tolerance.

Then the BOPP/PE laminated film is winded into a rolling film. The rolling film is subjected to edge trimming and corona treatment (to increase the surface tension of the film), and ultimately, it is winded into a tubular film roll, and the tubular film roll is transported to the aging treatment area where the film roll is subjected to the aging treatment for 24 hours.

Temperature control of the extruder laminating machine is listed in the following table 3:

**Table 3**

| zone 1 | zone 2 | zone 3 | zone 4 | zone 5 | zone 6 |
|---|---|---|---|---|---|
| 180∼190°C | 250∼260°C | 280∼290°C | 290∼300°C | 290∼300°C | 290∼300°C |

Temperature control of the die lip zones of the laminating machine is listed in the following table 4:

**Table 4**

| zone 1 | zone 2 | zone 3 | zone 4 | zone 5 | zone 6 |
|---|---|---|---|---|---|
| 280∼290°C | 290∼300°C | 294∼300°C | 290∼300°C | 290∼300°C | 280∼290°C |

In the multifunctional, long-acting antirust film of the example, the upper layer is a thin-film layer comprising nylon 6 as the base materal. The adhesive is applied to the BOPP/PE laminated layer using a dry laminating machine to form an adhesive layer, and then the nylon 6 thin-film layer covers the BOPP/PE laminated layer with the aid of the adhesive layer between, to complete the initial production of the multifunctional antirust film.

Then, the glued multifunctional antirust film is subjected to thickness measuring, edge trimming, corona treatment, winding-up, aging treatment, and product packaging before entering the bag-making workshop, where the antirust film is made into antirust bags to supply the orders from various manufacturers.

The multifunctional, long-acting antirust film greatly improves the technical properties, and its properties are beyond the ordinary antirust film. The technical parameters of the multifunctional, long-acting antirust film are as follows:
(1) film thickness: from 30 to 90 microns;
(2) Tensile strength: compared with ordinary antirust film with the same thickness, the tensile strength of the antirust film of the present invention increases by 31%;
(3) puncture resistance: compared with ordinary antirust film with the same thickness, the puncture resistance of the antirust film of the present invention increases by 33%;
(4) tear resistance: compared with ordinary antirust film with the same thickness, the tear resistance of the antirust film of the present invention increases by 30%;
(5) Heat-seal strength: compared with ordinary antirust film with the same thickness, the Heat-seal strength of the antirust film of the present invention increases by 28.7%;
(6) moisture permeability: 0g/m².H;
(7) Oxygen permeation ratio: 0 g/m².H;
(8) Antirust time: More than 10 years;
(9) bacteria-inhibiting time: Long-acting effective.

### Example 8

Refer to Figure 1 and Figure 2: in the multifunctional, long-acting antirust film of the example, the nylon 6 thin layer accounts for 30 %, the adhesive layer 2 accounts for 7.5 %, the antimicrobial layer 3 accounts for 32 %, and the antirust layer 4 accounts for 30.5 % of its total mass;
other solutions and work processes of the example are the same as the example 7.

### Example 9

Refer to Figure 1 and Figure 2: in the multifunctional, long-acting antirust film of the example, the nylon 6 thin layer accounts for 30 %, the adhesive layer 2 accounts for 7.5 %, the antimicrobial layer 3 accounts for 32 %, and the antirust layer 4 accounts for 30.5 % of its total mass;
other solutions and work processes of the example are the same as the example 7.

### Example 10

Refer to Figure 1 and Figure 2: in the multifunctional, long-acting antirust film of the example, the nylon 6 thin layer accounts for 31 %, the adhesive layer 2 accounts for 8 %, the antimicrobial layer 3 accounts for 31 %, and the antirust layer 4 accounts for 30 % of its total mass;
other solutions and work processes of the example are the same as the example 7.

### Example 11

Refer to Figure 1 and Figure 2: in the multifunctional, long-acting antirust film of the example, the nylon 6 thin layer accounts for 32%, the adhesive layer 2 accounts for 7.5%, the antimicrobial layer 3 accounts for 30%, and the antirust layer 4 accounts for 30.5% of its total mass;
other solutions and work processes of the example are the same as the example 7.

### Example 12

Refer to Figure 1 and Figure 2: in the multifunctional, long-acting antirust film of the example, the nylon 6 thin layer accounts for 32%, the adhesive layer 2 accounts for 8%, the antimicrobial layer 3 accounts for 34%, and the antirust layer 4 accounts for 26% of its total mass;
other solutions and work processes of the example are the same as with the example 7.

## Claims

1. A multifunctional, long-acting antirust film comprising: a nylon 6 thin-film layer, an adhesive layer, an antimicrobial layer and an antirust layer; the antimicrobial layer covers the antirust layer, the adhesive layer covers the antimicrobial layer, and the nylon 6 thin-film layer covers the adhesive layer
wherein the nylon 6 thin-film layer accounts for from 25% to 32%, the adhesive layer accounts for from 6% to 8%, the antimicrobial layer accounts for from 30 to 35%, and the antirust layer accounts for from 26% to 35% of its total mass;
the antirust layer comprises from 23.5 to 26 parts by mass of a binary copolymer of PP, from 3 to 4 parts by mass of a thermoplastic elastomer, from 0.5 to 1 parts by mass of an antisticking agent and from 2 to 4 parts by mass of an antirust masterbatch;
the antimicrobial layer comprises from 27 to 29 parts by mass of polyethylene and from 3 to 6 parts by mass of an antimicrobial masterbatch.

2. The multifunctional, long-acting antirust film of claim 1, which is **characterized in that** the adhesive layer uses a laminating adhesive for dry lamination machine.

3. The multifunctional, long-acting antirust film of claim 1 or 2, which is **characterized in that** the nylon 6 thin-film layer uses a polyamide-6 thin-flm.

4. The multifunctional, long-acting antirust film of claim 1 or 2, which is **characterized in that** the polyethylene uses metallocene polyethylene.

5. The multifunctional, long-acting antirust film of claim 1 or 2, which is **characterized in that** the antirust masterbatch uses benzotriazole antirust masterbatch.

6. A method for preparing the multifunctional, long-acting antirust film of claim 1, including the following steps of:
(1) selecting materials: in the multifunctional, long-acting antirust film, the nylon 6 thin-film layer accounts for 25∼32%, the adhesive layer accounts for 6∼8 %, the antimicrobial layer accounts for 30∼ 35%, and the antirust layer accounts for 26 to 35% of the total mass;
the antirust layer comprises from 23.5 to 26 parts by mass of a binary copolymer of PP, from 3 to 4 parts by mass of a thermoplastic elastomer, from 0.5 to 1 parts by mass of an antisticking agent and from 2 to 4 parts by mass of an antirust masterbatch;
the antimicrobial layer comprises from 27 to 29 parts by mass of polyethylene and from 3 to 6 parts by mass of an antimicrobial masterbatch;
(2) a process for preparing an antirust layer adopts a co-extruded biaxial stretching method, and specifically includes the following steps:
(2.1) melting, plasticizing and extruding: plasticizing and extruding the configured materials of a binary copolymer of PP, a thermoplastic elastomer, an antisticking agent and an antirust masterbatch using an extruder to obtain molten materials;
(2.2) filtering: filtering the molten materials;
(2.3) tape-casting: having the filtered molten material attached to the chill-roll surface, and forming a cast film with the aid of a quenching roll, water bath and a guide roll;
(2.4) stretching: taking the cast film off, stretching it in the longitudinal direction, and then stretching it in the transverse direction;
(2.5) cooling the stretched fim and shaping it into a thin films; and
(2.6) traction winding-up: subjecting the thin film to edge trimming, thickness measuring and corona treatment, and then winding the thin film into a tubular film roll;
(3) applying an antimicrobial material to the antirust layer using a laminating machine; and
(4) applying an adhesive to the antimicrobial layer, then having a nylon 6 thin-film glued to the adhesive layer using a lamination machine, to form a multifunctional, long-acting antirust film.

7. The method of claim 6, which is **characterized in that** the step(3) includes the following steps of:
(3.1) premixing polyethylene with an antimicrobial masterbatch, feeding the mixture into the hopper using a feeder, then into the extruder for melting and plasticizing the mixture, and filtering the molten mixture using a filter before entering the T- type die head;
(3.2) laminating: laminating the flake melt extruded from the die lip of the T-type die head to the antirust layer uniformly; and
(3.3) thickness measuring and edge trimming: measuring the thickness of the laminated film, winding it into a roll film, and subjecting the roll film to edge trimming treatment.

8. The method of claim 6 or 7, which is **characterized in that** the antirust masterbatch is mixed and pelleted using a pressurized reciprocating twin-screw intermixing extruder.

## Patentansprüche

1. Multifunktionelle, langwirkende Rostschutzfolie, umfassend: eine Nylon-6-Dünnfilmschicht, eine Klebeschicht, eine antimikrobielle Schicht und eine Rostschutzschicht; wobei die antimikrobielle Schicht die Rostschutzschicht bedeckt, die Klebeschicht die antimikrobielle Schicht bedeckt und die Nylin-6-Dünnfilmschicht die Klebeschicht bedeckt;
wobei die Nylon-6-Dünnfilmschicht 25 % bis 32 % ausmacht, die Klebeschicht 6 % bis 8 % ausmacht, die antimikrobielle Schicht 30 % bis 35 % ausmacht, und die Rostschutzschicht 26 % bis 35 % seiner Gesamtmasse ausmacht;
die Rostschutzschicht 23,5 bis 26 Masseteile eines binären Copolymers von PP, 3 bis 4 Masseteile eines thermoplastischen Elastomers, 0,5 bis 1 Masseteile eines Antihaftmittels und 2 bis 4 Masseteile eines Rotschutz-Masterbatches umfasst;
die antimikrobielle Schicht 27 bis 29 Masseteile von Polyethylen und 3 bis 6 Masseteile eines antimikrobiellen Masterbatches umfasst.

2. Multifunktionelle, langwirkende Rostschutzfolie nach Anspruch 1, die **dadurch gekennzeichnet ist, dass** die Klebeschicht einen Laminierkleber für Trockenlaminiermaschine verwendet.

3. Multifunktionelle, langwirkende Rostschutzfolie nach Anspruch 1 oder 2, die **dadurch gekennzeichnet ist, dass** die Nylon-6-Dünnfilmschicht einen Polyamid-6-Dünnfilm verwendet.

4. Multifunktionelle, langwirkende Rostschutzfolie nach Anspruch 1 oder 2, die **dadurch gekennzeichnet ist, dass** das Polyethylen Metallocen-Polyethylen verwendet.

5. Multifunktionelle, langwirkende Rostschutzfolie nach Anspruch 1 oder 2, die **dadurch gekennzeichnet ist, dass** der Rostschutz-Masterbatch Benzotriazol-Rostschutz-Masterbatch verwendet.

6. Verfahren zur Herstellung der multifunktionellen, langwirkenden Rostschutzfolie nach Anspruch 1, umfassend die folgenden Schritte:
(1) Auswählen der Materialien: in der multifunktionellen langwirkenden Rostschutzfolie macht die Nylon-6-Dünnfilmschicht 25 % bis 32 % aus, die Klebeschicht macht 6 % bis 8 % aus, die antimikrobielle Schicht macht 30 % bis 35 % aus, und die Rostschutzschicht macht 26 % bis 35 % seiner Gesamtmasse aus;
die Rostschutzschicht 23,5 bis 26 Masseteile eines binären Copolymers von PP, 3 bis 4 Masseteile eines thermoplastischen Elastomers, 0,5 bis 1 Masseteile eines Antihaftmittels und 2 bis 4 Masseteile eines Rotschutz-Masterbatches umfasst;
die antimikrobielle Schicht umfasst 27 bis 29 Masseteile von Polyethylen und 3 bis 6 Masseteile eines antimikrobiellen Masterbatches;
(2) ein Prozess zur Herstellung einer Rostschutzschicht wendet ein Coextrusions- und Biaxialreckverfahren an und umfasst insbesondere die folgenden Schritte:
(2.1) Schmelzen, Plastifizieren und Extrudieren: Plastifizieren der festgelegten Materialien eines binären Copolymers von PP, eines thermoplastischen Elastomers, eines Antihaftmittels und eines Rostschutz-Masterbatches unter Verwendung eines Extruders, um geschmolzene Materialien zu erhalten;
(2.2) Filtern: Filtern der geschmolzenen Materialien;
(2.3) Foliengießen: Veranlassen des Anbringens des gefilterten geschmolzenen Materials an der Kühlwalzenoberfläche und Bilden einer Gießfolie mit Hilfe einer Abschreckwalze, eines Wasserbads und einer Führungswalze;
(2.4) Recken: Abnehmen der Gießfolie, Recken derselben in ihrer Längsrichtung und anschließendes Recken derselben in der Querrichtung;
(2.5) Abkühlen der gereckten Folie und Formen derselben zu einer Dünnfolie; und
(2.6) Traktionswicklung: Unterziehen der Dünnfolie einem Beschnitt der Kanten, einer Dickenmessung und einer Koronabehandlung, und anschließendes Wickeln der Dünnfolie zu einer rohrförmigen Folienrolle;
(3) Auftragen eines antimikrobiellen Materials auf die Rostschutzschicht unter Verwendung einer Laminiermaschine; und
(4) Auftragen eines Klebemittels auf die antimikrobielle Schicht, anschließendes Veranlassen des Klebens einer Nylon-6-Dünnfilms an die Klebeschicht unter Verwendung einer Laminiermaschine, um eine multifunktionelle, langwirkende Rostschutzfolie zu bilden.

7. Verfahren nach Anspruch 6, **dadurch gekennzeichnet, dass** der Schritt (3) ferner die folgenden Schritte umfasst:
(3.1) Vormischen von Polyethylen mit einem antimikrobiellen Masterbatch, Einführen des Gemischs unter Verwendung einer Beschickungseinrichtung in den Trichter und anschließend in den Extruder zum Schmelzen und Plastifizieren des Gemischs und Filtern des geschmolzenen Gemischs unter Verwendung eines Filters vor seinem Eintreten in den Extruderkopf vom T-Typ;
(3.2) Laminieren: gleichmäßiges Laminieren der aus dem Austrittsspalt des Extruderkopfs vom T-Typ extrudierten Flockenschmelze auf die Rostschutzschicht; und
(3.3) Dickenmessung und Kantenbeschnitt: Messen der Dicke der laminierten Folie, Wickeln derselben zu einer Rollenfolie und Unterziehen der Rollenfolie einer Kantenbeschnittbehandlung.

8. Verfahren nach Anspruch 6 oder 7, das **dadurch gekennzeichnet ist, dass** der Rostschutz-Masterbatch unter Verwendung eines druckbeaufschlagten Doppelschnecken-Mischextruders mit oszillierenden Schnecken gemischt und pelletiert wird.

## Revendications

1. Film antirouille multifonction à action prolongée comprenant : une couche en film mince de Nylon 6, une couche adhésive, une couche antimicrobienne et une couche antirouille ; la couche antimicrobienne recouvre la couche antirouille, la couche adhésive recouvre la couche antimicrobienne, et la couche en film mince de Nylon 6 recouvre la couche adhésive ;
dans lequel la couche en film mince de Nylon 6 représente de 25 % à 32 %, la couche adhésive représente de 6 % à 8 %, la couche antimicrobienne représente de 30 % à 35 %, et la couche antirouille représente de 26 % à 35 % de la masse totale du film ;
la couche antirouille comprend de 23,5 à 26 parties en masse d'un copolymère binaire de PP, de 3 à 4 parties en masse d'un élastomère thermoplastique, de 0,5 à 1 partie en masse d'un agent antiadhérent et de 2 à 4 parties en masse d'un mélange-maître antirouille ;
la couche antimicrobienne comprend de 27 à 29 parties en masse de polyéthylène et de 3 à 6 parties en masse d'un mélange-maître antimicrobien.

2. Film antirouille multifonction à action prolongée selon la revendication 1, qui est **caractérisé en ce que** la couche adhésive utilise un adhésif de contrecollage pour machine de contrecollage à sec.

3. Film antirouille multifonction à action prolongée selon les revendications 1 ou 2, qui est **caractérisé en ce que** la couche en film mince de Nylon 6 utilise un film mince de polyamide 6.

4. Film antirouille multifonction à action prolongée selon les revendications 1 ou 2, qui est **caractérisé en ce que** le polyéthylène utilise un polyéthylène métallocène.

5. Film antirouille multifonction à action prolongée selon les revendications 1 ou 2, qui est **caractérisé en ce que** le mélange-maître antirouille utilise un mélange-maître antirouille à base de benzotriazole.

6. Procédé de préparation du film antirouille multifonction à action prolongée selon la revendication 1, comprenant les étapes suivantes :
1) choix des matériaux : dans le film antirouille multifonction à action prolongée, la couche en film mince de Nylon 6 représente de 25 % à environ 32 %, la couche adhésive représente de 6 % à environ 8 %, la couche antimicrobienne représente de 30 % à environ 35 %, et la couche antirouille représente de 26 % à 35 % de la masse totale ;
la couche antirouille comprend de 23,5 à 26 parties en masse d'un copolymère binaire de PP, de 3 à 4 parties en masse d'un élastomère thermoplastique, de 0,5 à 1 partie en masse d'un agent antiadhérent et de 2 à 4 parties en masse d'un mélange-maître antirouille ;
la couche antimicrobienne comprend de 27 à 29 parties en masse de polyéthylène et de 3 à 6 parties en masse d'un mélange-maître antimicrobien ;
2) une opération de préparation d'une couche antirouille emploie un procédé d'étirage biaxial à coextrusion, et comprend spécifiquement les étapes suivantes :
2.1) fusion, plastification et extrusion : on plastifie et on extrude les matériaux configurés d'un copolymère binaire de PP, d'un élastomère thermoplastique, d'un agent antiadhérent et d'un mélange-maître antirouille à l'aide d'une extrudeuse pour obtenir des matériaux fondus ;
2.2) filtrage : on filtre les matériaux fondus ;
2.3) coulage en bande : on fixe le matériau fondu filtré sur la surface d'un cylindre refroidisseur, et on forme un film coulé à l'aide d'un cylindre de refroidissement rapide, d'un bain d'eau et d'un rouleau de guidage ;
2.4) étirage : on enlève le film coulé, on l'étire dans le sens longitudinal, et on l'étire ensuite dans le sens transversal ;
2.5) on refroidit le film étiré et on lui donne la forme d'un film mince ; et
2.6) enroulement sous traction : on soumet le film mince à une finition des bords, à une mesure d'épaisseur et à un traitement corona, et on enroule ensuite le film mince en un rouleau de film tubulaire ;
3) application d'un matériau antimicrobien sur la couche antirouille à l'aide d'une machine contrecolleuse ; et
4) application d'un adhésif sur la couche antimicrobienne, puis collage d'un film mince de Nylon 6 sur la couche adhésive à l'aide d'une machine de contrecollage, pour former un film antirouille multifonction à action prolongée.

7. Procédé selon la revendication 6, qui est **caractérisé en ce que** l'étape 3) comprend les étapes suivantes :
3.1) mélange préalable du polyéthylène avec un mélange-maître antirouille, introduction du mélange dans la trémie à l'aide d'une ligne d'alimentation, puis dans l'extrudeuse pour fondre et plastifier le mélange, et filtrage du mélange fondu à l'aide d'un filtre avant son entrée dans la tête d'extrudeuse en T ;
3.2) contrecollage : on contrecolle la masse de paillettes fondues extrudée à partie de la lèvre de filière de l'extrudeuse en T sur la couche antirouille de manière uniforme ; et
3.3) mesure d'épaisseur et finition des bords : on mesure l'épaisseur du film contrecollé, on enroule celui-ci pour former un film en rouleau, et on soumet le film en rouleau à un traitement de finition des bords.

8. Procédé selon les revendications 6 ou 7, qui est **caractérisé en ce que** le mélange-maître antirouille est mélangé et transformé en pastilles à l'aide d'une extrudeuse malaxeuse double vis alternative sous pression.
